# EUROPEAN PATENT APPLICATION

(11) **EP 4 403 526 A1**
(43) Date of publication of application: **24.07.2024**
(21) Application number: 24152750.6
(22) Date of filing: 19.01.2024
(51) Int. Cl.: C02F 3/34, C02F 103/02

(54) **PROCESS FOR WATER TREATMENT IN OPEN RECOOLING PLANTS**

(30) Priority: 23.01.2023 DE 102023101591; 12.05.2023 DE 102023112678
(71) Applicant: BlueActivity® GmbH, 69115 Heidelberg (DE)
(72) Inventor: Havighorst, Lars, 69115 Heidelberg (DE)
(74) Representative: Ziebig Hengelhaupt Intellectual Property Attorneys Patentanwaltskanzlei PartGmbB

(57) **Abstract**

The presently claimed invention relates to a process for treating cooling water in open recooling plants, whereby a legionella level of <100 CFU/100ml, measured according to DIN EN ISO 11731:2019-03, is achieved, characterised in that bacteria are added to the cooling water, whereby no biocides are added to the cooling water, and wherein the bacteria form a biofilm on the surface of the open recooling plant, which has a thickness in the range of 0.001 - 250 µm.

## Description

### TECHNICAL FIELD OF THE INVENTION

Power plants and combined heat and power plants have several cooling systems for various plant processes such as steam condensation, temperature control of chemical reactors, cooling of bearings of rotating machines, lubricating oil cooling and many others. Particularly in industrial plants with open recooling plants, large quantities of water are required to cool the process line, which become contaminated with organic components such as particles, microbes, etc. during the cooling process.

These cooling systems in particular must be protected against corrosion, deposits and microbiological growth in order to maximise performance and avoid malfunctions that could partially or completely paralyse the operation of the system. The organic components cause deposits in the cooling circuit, which have to be removed at regular intervals at great expense and disposed of separately. This significantly increases the ongoing operating costs of the respective system. Another and increasingly important factor is the potential environmental impact of water treatment, particularly with regard to chemicals that may be contained in the plant's waste water. Treatment programmes that were once commonplace are no longer permitted or will be severely restricted due to discharge regulations.

Moreover, another problem is the legionella contamination of cooling circuits. Aerosols have been identified as the cause of legionella diseases, particularly in open cooling circuits, i.e. cooling circuits with open cooling towers.

The presently claimed invention relates to water treatment in open recooling plants and addresses, among other things, the difficulties mentioned above.

### BACKGROUND OF THE INVENTION

Biofilms are deposits on surfaces that are formed by microorganisms, especially bacteria, through the excretion of metabolic products. The biofilm therefore consists of the excreted film-forming products and the microorganisms living or already dead in this matrix. Biofilms consist of approximately 95% water. Most of the dry matter consists of extracellular polymeric substances. Biofilms can also contain organic and inorganic particles. Around 90 % of all bacteria in water live in biofilms, as this gives them advantages, e.g. the enrichment of nutrients, the formation of biocoenoses (biodiversity, symbiosis) and protection against biocides and other environmental factors. The biofilm matrix thus protects the microorganisms from substances that are toxic to them, such as biocides. Microorganisms in a biofilm are therefore much more difficult to combat than those that float freely in the water phase. Biofilms adhere stably to the substrate or walls, respectively, and are difficult to remove using chemical agents. The formation of biofilms is therefore a general problem that is difficult to control in all water systems in which microorganisms such as bacteria are viable. For example, such problems occur in drinking water pipes, cooling water circuits or other technical process fluids, e.g. in power stations, steel and rolling mills, paper mills, etc. In addition to the mechanical obstruction of the flow behaviour up to the blockage of pipes and valves, the microbially formed deposits also cause a reduction in heat transfer to heat exchanger surfaces.

Once a biofilm has formed, it is difficult to dissolve again. Therefore, a common method is to prevent the formation of biofilms through preventative measures. Biocides are usually added to the water system for this purpose.

Biofilms have been extensively studied due to their high economic, technical and health significance. An overview of biofilm formation in water systems is provided by H.-C. Flemming: "Biofouling in water systems - cases, causes, and countermeasures", App. Microbiol. Biotechnol. 59, pp. 629 - 640 (2002). It shows, among other things, that most microorganisms can form biofilms. In them, the microorganisms are embedded in a matrix of microbiological origin, which consists of extracellular polymeric substances. These mainly comprise polysaccharides and proteins, which form a hydrogel-like matrix.

Bacteria that are dangerous to humans, such as legionella, can colonise the water in open recooling plants. Legionella are gram-negative and non-spore-forming bacteria that live in water. Legionella are potentially pathogenic to humans. The most important species for human diseases is *Legionella pneumophila* (proportion of around 70 % to 90 %, depending on the region). It is the causative agent of legionellosis or Legionnaires' disease, which triggers pneumonia. Legionella and pseudomonads are therefore categorised as biological agents in the sense of the German Biological Agents Ordinance *BioStoffV* (microorganisms that can cause either an infection, an allergy or a toxic effect in humans). According to the Technical Rule for Biological Agents 466 of the Federal Institute for Occupational Safety and Health, Legionella is assigned to risk group 1 or risk group 2, depending on the species, in accordance with the Ordinance on Safety and Health Protection when Working with Biological Agents. All serogroups of *Legionella pneumophila* and *Pseudomonas aeruginosa* belong to risk group 2. In principle, Legionella can be transmitted through contact with water vapour if the Legionella enters the deep sections of the lungs, whereby inhalation of water vapour containing bacteria as a bioaerosol (aspiration or inhalation), e.g. from open recooling plants, can lead to infection. Evaporative cooling systems are used to dissipate heat loads, e.g. from technical processes, into the environment, although only air-cooled processes in which water is brought into direct contact with the air are relevant. In principle, there is a tendency for aerosols to form in all technologies in which water is channelled into an air stream, despite the use of droplet separators. Due to favourable propagation conditions (humidity, nutrient supply, temperatures) for microorganisms (bacteria, algae, moulds, protozoa) in the water and on the surfaces, the entrained water droplets can contain microorganisms such as Legionella.

Accordingly, biocides are used to combat the biofilm and the legionella bacteria it contains. Biocides are generally substances and products that contain active ingredients that combat pests and nuisances such as insects, mice or rats, but also algae, fungi or bacteria. In the European Union, biocidal products are subject to Regulation (EU) No. 528/2012 (Biocidal Products Regulation). This defines biocidal products in Article 3 Paragraph 1 a) as:
*"any substance or mixture, in the form in which it is supplied to the user, consisting of, containing or generating one or more active substances, with the intention of destroying, deterring, rendering harmless, preventing the action of, or otherwise exerting a controlling effect on, any harmful organism by any means other than mere physical or mechanical action"* and *"any substance or mixture, generated from substances or mixtures which do not themselves fall under the first indent, to be used with the intention of destroying, deterring, rendering harmless, preventing the action of, or otherwise exerting a controlling effect on, any harmful organism by means other than mere physical or mechanical action."*

Examples of biocidal applications include air conditioning technology. Here, biocides against microorganisms are added to the water circuit in order to prevent contamination of the recooling plant. The active substances used in biocides can be classified into electrophilic, lytic and oxidising active substances.

Electrophilic biocides such as glutaraldehyde, isothiazolinones, oxazolidines, bronopol and DBNPA react with nucleophilic functional groups such as -SH (thiol) and -NH (amine). This cross-links the amino and nucleic acids, for example, causing the cytoplasm to clump together. Lytic biocides such as quaternary ammonium and phosphonium compounds are amphiphilic surfactants and dissolve the cell membrane. Ethanol and aldehydes also act against the cell membrane. Oxidising biocides such as chlorine dioxide, sodium hypochlorite or peroxyacetic acid destroy the cell by forming free radicals.

### STATE OF THE ART

The use of bacteria in the decomposition of organic waste produced by fish food residues, faeces, dead plants or bottom sludge is generally known.

Document EP 0 513 809 A describes a process for the treatment of coolants and/or lubricants used in rolling mills, whereby, according to this document, it is known in principle to separate the coarse mill scale from the contaminated process water by means of gravity sedimentation and to remove the medium and fine mill scale particles from the pre-clarified process water by means of magnetic separation. Furthermore, an oil phase is separated via a flotation process in which oil and grease components float to the surface. This is described in detail in the left-hand column, last paragraph of page 5 of the publication. However, it does not contain any suggestion to break down organic substances in the cooling circuit water by adding functional bacteria. A biological purification stage is therefore missing.

WO 2011/045071 A discloses, according to the description from page 12, bottom paragraph, that substrate-bound, immobilised bacteria are provided in a filter. These bacteria are suitable for metabolising nutrients from the cooling water so that they are removed from other bacteria in the cooling water, thus preventing the formation of bacteria in other areas of the system. This filter can be regarded as a separation device for separating organic substances. In the system according to this publication, the bacteria are already present in the filter, as they are substrate-bound and immobilised in the filter. The addition of, for example, a variable quantity of bacteria adapted to the respective requirement via a specially provided dosing device is therefore expressly not intended and is also not suggested by the structure of the system disclosed therein.

DE 10 2020 213 078 A1 teaches a method for removing legionella from the cooling circuit water of industrial systems contaminated with organic substances and inorganic particles. For this purpose, the cooling circuit water is first passed in a cooling circuit at least via a separating device for separating the organic substances and the inorganic particles from the cooling circuit water, as well as via an open cooling tower arranged downstream of the separating device, wherein bacteria are added to the cooling circuit water at at least one position of the cooling circuit. It is further taught that the bacteria can be added to the cooling circuit water upstream and/or inside the separating device and/or upstream of the cooling tower. Furthermore, it is taught that the bacteria should be pure cultures of species that specifically break down oil and fat.

DE 10 2020 002 812 A1 discloses a process comparable to DE'078 for treating cooling circuit water of industrial plants contaminated with organic substances and inorganic particles, whereby bacteria are added to the cooling circuit, the bacteria being suitable for breaking down the organic components present in the cooling circuit, and the aerosol produced in a cooling tower of the cooling circuit is disinfected.

DE 20 2017 102 180 U1 discloses a cooling water conditioning agent comprising probiotic Bacillus bacteria, hardness stabilisers and corrosion inhibitors.

DE 10 2020 213 077 A1 discloses a process comparable to DE'078 for treating cooling circuit water from industrial plants that is contaminated with organic substances and inorganic particles, whereby the organic substances and inorganic particles are first separated from the cooling circuit water. This is followed by cooling of the pre-cleaned cooling circuit water via an open cooling tower, which is followed by desalination of at least a partial volume flow of the cooled, pre-cleaned cooling circuit water by means of an at least single-stage desalination plant, before a biological purification stage is taught by the addition of bacteria which are suitable for breaking down the organic substances present in the cooling circuit water. The bacteria can be added to the cooling circuit water before any of the above steps. With regard to the bacteria, it is disclosed that these should be able to grow under anaerobic environmental conditions in order to exist in a settling tank and deeper layers of a clarifier, and further species should be able to live aerobically in order to be able to remove oils and fats in the cooling tower and on the surface of the clarifier as well. Like DE'078, this publication is also limited to use in circulation systems. Thus, this publication is also expressly limited to use in circulation systems. The presently claimed invention relates to the field of open recooling systems, where the regular addition of water is required, which contradicts a circulation system.

EP 0 372 520 B1 teaches a method for reducing the formation of slime and deposits in systems in which water is recirculated without the addition of biocides, whereby non-sessile, living microorganisms are continuously added to the recirculated water in a targeted manner depending on the organic load, which microorganisms remove the nutrients from the slime- and deposit-forming microorganisms present in the recirculated water by absorbing them. The microorganisms disclosed include bacteria from the taxonomic group of Bacillus, Lactobacillus and Streptococcus. Furthermore, it is taught that the bacteria should be added to the recirculated water in the form of dry bacteria with an activation time of one to ten hours. The bacteria selected should be non-sessile bacteria, i.e. microorganisms or bacteria that have no or only a low tendency to adhere to surfaces compared to the slime- and film-forming microorganisms present in the system.

The principle of using non-sessile bacteria as explained here is contrary to the presently claimed invention. Furthermore, this publication is expressly limited to use in recirculation systems. The presently claimed invention relates to the field of open recooling systems, where the regular addition of water is required, which contradicts a recirculation system.

It is also known that various processes, also in combination with each other, are used to treat the cooling water, such as the removal of solids by means of filtration and the subsequent addition of hardness stabilisers, corrosion inhibitors and dispersants, whereby an attempt is made to prevent these additives from promoting the growth of microorganisms.

Biocides and UV irradiation are used to limit microbiological contamination. For hardness stabilisation to prevent deposits on heat transfer surfaces and to ensure trouble-free operation (heat exchangers, cooling tower internals, measuring equipment and fittings), the following substances are added to the make-up water: inorganic phosphates, organic phosphorus compounds (phosphonic acids, phosphonates), polymer carboxylates and their derivatives, as well as acids. The following corrosion inhibitors, among others, are added to the cooling water to form a protective coating and thus protect metallic materials against corrosion: inorganic and organic phosphorus compounds, inhibitors containing metal ions such as zinc compounds, molybdate, special synthetic inhibitors such as azole derivatives, benzoate and silicates.

The presently claimed invention was made against this background.

The following terms are defined in the context of this disclosure:
*Legionella* spp., hereinafter referred to as Legionella, are pathogens that are transmitted by respirable aerosols. The presence of Legionella in industrial water cannot be detected by the parameter "general colony count" or by other indicator bacteria. Direct detection of this human pathogenic bacterium is therefore essential in terms of health protection. *Pseudomonas aeruginosa,* hereinafter also referred to as Pseudomonas, is a slime-forming, human pathogenic bacterium and is one of the primary colonisers of surfaces (biofilm formers).

A biofilm refers to microorganisms adhering to surfaces that are surrounded by a matrix of self-formed extracellular polymeric substances. The majority of the dry matter consists of extracellular polymeric substances. Biofilms can also contain organic and inorganic particles. Microorganisms are continuously released from biofilms into the process water. The release of pathogens (e.g. Legionella, *Pseudomonas aeruginosa*) is of particular relevance from a health point of view. *Pseudomonas aeruginosa* can cause inflammation of the lungs, ears, eyes and skin and is one of the primary colonisers of biofilms. Due to its ability to form slime, *Pseudomonas aeruginosa has an* increased resistance to a large number of biocides. Legionella can cause two different clinical pictures: On the one hand, severe, atypical pneumonia, which is fatal in 7 % to 15 % of cases, and, on the other hand, flu-like illness (Pontiac fever). There is no transmission from person to person. Infection with legionella occurs through the inhalation of respirable aerosols containing legionella. In principle, it can be assumed that the risk of infection increases with the concentration of legionella in the air and the exposure time.

Evaporative cooling systems are used to transfer process heat from e.g. power plants, refrigeration systems, data centres and process engineering systems of all kinds to the ambient air. Those cooling systems are applied in various industries, for instance within the chemical industry, petro-chemical industry, car industry and steel industry, just to name some of those. A basic distinction can be made between evaporative cooling systems with wet cooling towers with open or closed cooling circuits and cooling systems with adiabatic pre-cooling. The theoretically achievable cooling limit for wet cooling towers is the wet bulb temperature, which can be several degrees below the dry air temperature, especially in the summer months. With adiabatic pre-cooling, complete saturation of the supply air cannot generally be achieved. In wet cooling towers with an open circuit, the process water comes into direct contact with the air. In closed systems, the medium to be cooled does not come into direct contact with the cooling air, but is cooled in heat exchangers.

Cooling water is defined below as water that circulates in an evaporative cooling system for the purpose of heat dissipation and is in contact with the atmosphere. In general, deposits on the surfaces of components in contact with water should be avoided. They can promote colonisation by microorganisms, impair heat transfer and cause corrosion damage. The proliferation of microorganisms that can form biofilms must be minimised, as biofilms can be a habitat for pathogens such as legionella. Biofilms also lead to disruptions in heat transfer, deposits in control valves and measuring cells and promote corrosion.

Biocides may not penetrate areas with stagnant water or only a low flow rate, or only in insufficient concentrations. This means that these areas of the water cycle must be minimised to ensure the required minimisation of microorganisms by means of constructional measures, such as separating dead pipes, or by means of operational measures, such as a flushing regime. The desalination process must be interlocked for the duration of the dosing and a follow-up time to be defined, taking into account the requirements of water legislation.

The presently claimed invention relates to water treatment in open recooling plants and addresses, among other things, the difficulties mentioned above.

It is therefore an object of the presently claimed invention to provide a process for the treatment of cooling water in open recooling plants, whereby no biocides are added to the cooling water.

It is therefore another object of the presently claimed invention to reduce water consumption in systems selected from the group consisting of open recooling plants and wet scrubbers, and at the same time to ensure system performance and compliance with the legal requirements for hygiene safety, i.e. to avoid excessive biofilm formation.

### DESCRIPTION OF THE INVENTION

The presently claimed invention relates to a process for the treatment of cooling water in open recooling plants, wherein a legionella level of <100 CFU/100ml, measured according to DIN EN ISO 11731:2019-03, is achieved, characterised in that bacteria are added to the cooling water, wherein no biocides are added to the cooling water, and wherein the bacteria form a biofilm on the surface of the open recooling plant, which has a thickness in the range of 0.001 - 250 µm.

The added bacteria make the addition of biocides to ensure system performance superfluous in a surprising way. Excessive biofilm formation is thus avoided both sustainably and permanently. This also prevents the formation of heat blockers and enables efficient cooling, which in turn leads to an increase in efficiency and a reduction in the energy consumption of the entire system. The person skilled in the art knows that a biofilm with a thickness of 1400 µm reduces the cooling performance by 50%. Furthermore, microbially induced corrosion, so-called biocorrosion, is avoided according to the claimed invention. Biodiversity in the wastewater is also safeguarded by avoiding biocides at all. Occupational safety is also improved, as the bacteria are not a hazardous substance. This enables hygienic operation of the plant. Material damage to trickling filters, pipework and connecting elements is also avoided, as these are no longer attacked by the halogens in the biocides. Surprisingly, dead spaces, areas with only laminar flow and areas in the cooling system that only experience wetting (e.g. cooling fins) are also cleaned by the process according to the presently claimed invention. Surprisingly, the process according to the presently claimed invention enables the reduction of downtimes for system cleaning, in some cases even rendering them completely superfluous. This not only increases the economic efficiency of the systems, but is also sustainable and conserves resources.

Open recooling plants are open systems without a closed primary circuit in which intensive contact between water and air is achieved. This is to be distinguished from systems in which the medium to be cooled is in a closed primary circuit and has no contact with the ambient air. Cooling media other than water can also be used in these closed systems. These media are generally channelled through a tube bundle (so-called primary circuit), which is sprayed from the outside (so-called secondary circuit or spray water circuit). The heat is dissipated from the medium via the externally moistened cooling surfaces. The evaporation of a small part of the spray water releases the heat into the environment (so-called latent heat transfer). In open systems, fresh water must be regularly added to the system due to evaporation. This constantly provides new nutrients for bacterial growth. In addition, an open recooling plant acts like an air washer, so that substances contained in the air, such as dust and pollen, enter the water circuit. Nitrogen, carbon and sulphur can also be introduced into the system as a result of the process, for example with direct cooling, which together form nutrients for the growth of organic matter (slime). In contrast, no new nutrient input is possible in closed systems. Existing bacteria, i.e. Legionella and Pseudomonas, would die due to a lack of nutrients. No discharge into the environment would also be possible, as the closed systems - at least in the primary circuit - are closed.

According to a further embodiment of the presently claimed invention, the concentration of Pseudomonas in the cooling water of open recooling plants is below a level of 100 CFU/100ml, measured according to DIN EN ISO 16266:2008.

This makes it possible to operate the open recooling plants without polluting the environment, people and animals with dangerous water vapour containing harmful bacteria.

According to a preferred embodiment of the presently claimed invention, the bacteria form a biofilm on the surface of the recooling system, which has a thickness in the range of 0.001 - 250 µm, preferably in the range of 0.01 - 100 µm, more preferably below 32 µm, and particularly preferably in the range of 0.1 - 10 µm.

Phrased differently a preferred embodiment of the presently claimed invention establishes a biofilm on the surface of the recooling system, which has a maximum thickness of 250 µm, preferably with a maximum thickness of 100 µm, more preferably a maximum thickness of 32 µm, and particularly preferably with a maximum thickness of 10 µm.

Advantageously, the bacteria used form a very thin biofilm without large water inclusions, which means that no heat blockers are formed and efficient cooling is possible. This very thin biofilm also prevents the formation of biocorrosion, as the acid secreted by the bacteria cannot collect in a microenvironment and lower the pH level locally. Instead, the acid formed is immediately diluted, preventing microbially induced corrosion, as well as other unwanted side effects like elimination of other bacteria.

Even more preferably, within an embodiment of the present invention a mixture of different Baccilus species is used, wherein preferably the mix comprises 3 anerobic and 2 aerobic Baccilus strains, wherein all of these strains are classified as safe for humans according to the QPS (qualified presumption of safety) assessment of the European Food Safety Authority (EFAS), without restrictions. Thus, those Baccilus species are also safe for animals and the environment.

Thus, the used bacteria are neither a disinfection measure nor an active substance. Accordingly, the used bacteria according to the invention does not fall under the requirements of REACH.

The thickness of the biofilm is preferably in the range of 0.001 - 250 µm, preferably in the range of 0.01 -100 µm, more preferably below 32 µm, and particularly preferably in the range of 0.1 - 10 µm, in order to strike a balance between competing factors. A biofilm that has the aforementioned thickness is beneficial for improving energy transfer while at the same time it is still thick enough to prevent biocorrosion effectively. Moreover, the biofilm can effectively prevent biocorrosion while not being too thick so that operational issues such as blockages and reduced flow occur which is an environment that is conducive to the growth of Legionalla. Furthermore, the biofilm has an optimal thickness to reduce the need for excess feed water.

According to an even more preferred embodiment of the presently claimed invention, the bacteria are not genetically mutated organisms, in particular the bacteria are not classified as hazardous to water.

The classification as non-hazardous to water is based on the origin or composition of the bacteria used, according to which there is no concern of a detrimental change in the water quality. This allows the cooling water to be discharged safely without further treatment, which means that the cooling water does not necessarily have to be discharged into the municipal network or a wastewater treatment plant as wastewater for which a charge is made, but can be used as extinguishing or irrigation water, for example.

Substances hazardous to water are those that are capable of adversely affecting the physical, chemical or biological properties of water. They are categorised in water hazard classes according to their hazardousness based on their physical, chemical and biological properties.

The German Federal Environment Agency decides on the classification of substances or substance groups into a water hazard class (*German abbreviation: WGK*)*.* It also decides on the classification of mixtures into water harzard classes and on the categorisation of substances or mixtures as not hazardous to water. These decisions are published in the Federal Gazette. The Federal Environment Agency decides on the basis of the results of the inspections and reviews, also taking into account the following: Existing own findings or assessments, in particular on toxicity, the mobility of a substance in the soil, groundwater permeability or accumulation in sediment as well as existing opinions of the Commission for the Evaluation of Substances Hazardous to Water. The Federal Environment Agency also provides a search function on the Internet that can be used to determine the existing classifications of substances and substance groups that are hazardous to water.

In a further embodiment of the presently claimed invention, gram-positive bacteria which grow under aerobic conditions are used.

Surprisingly, this has shown that the bacteria used are not slime formers and only form a very thin biofilm, which prevents the formation of heat blockers, as well as the formation of biocorrosion, as the acid secreted by the bacteria cannot collect in a microenvironment and locally lower the pH level. Instead, the acid formed is immediately diluted, preventing microbially induced corrosion. In general, this enables efficient cooling and resource-saving operation of the system.

The bacteria used according to the presently claimed invention are of natural origin and are classified as non-hazardous to water (nwg) according to the regulations on Installations for Handling Substances Hazardous to Water, so they can be safely released into the environment.

The bacteria used according to the presently claimed invention are also deposited in the ATCC (American Type Culture Collection) and classified as Biosafety Level 1.

The bacteria used according to the presently claimed invention are also classified under risk group 1 in TRBA 466 in the version dated 21 December 2020. Further tests, including OECD test methods (403/404/405/406), have been carried out and prove the safety of the bacteria used according to the presently claimed invention. According to the Canadian Domestic Substance List (CDSL) and the European Food Safety Assosiation (EFSA), the bacteria used according to the presently claimed invention are also classified as "food grade" and authorised for use in the food industry.

The bacteria used according to the presently claimed invention can also be found in the FDA "GRAS" list.

Based on an even more preferred embodiment of the presently claimed invention, the bacteria are maintained at a temperature in a range of 10-55°C, preferably in a range of 15-45°C.

This allows the bacteria to grow at the optimum temperature, which means that fewer bacteria need to be added to the system. This allows operation in the most resource-efficient way. As the temperature rises, the solubility of ions increases. Ca(OH)₂ , Mg(OH)₂ and CaCO₃, substances that are responsible for limescale formation, are now enriched in the water and can form limescale better.

Calcium concentration and alkalinity in the water ensure that the water becomes less corrosive, but if there are too many calcium ions in the water, limescale will form.

Based on a further preferred embodiment of the presently claimed invention, the pH is adjusted to a range of 4.5 - 10.0, preferably to a range of 5.0 - 9.5, preferably to a range of 5.5 - 9.3, more preferably to a range of 5.5 - 9.0.

This gives the bacteria the optimum pH level to grow, which means that fewer bacteria need to be added to the system. This allows operation in the most resource-friendly way.

According to a further preferred embodiment of the presently claimed invention, the electrical conductivity of the cooling water is 3000 - 10 µS / cm, preferably it is in the range of 2500 - 20 µS / cm, even more preferably in the range of 1500 - 100 µS / cm, determined according to ISO 7888:1985.

This provides the bacteria with a more optimal environment in which to grow, which means that fewer bacteria need to be added to the system. This allows operation in the most resource-friendly way. If the conductivity in the water increases, the corrosiveness increases.

In a further embodiment of the presently claimed invention, engineered biopolymers are added in addition to the bacteria. Preferably, the biopolymers are those which are applicable within a Langelier saturation index of 0.5 - 3.0. It is particularly preferred that the engineered biopolymers are polymers based exclusively on non-petroleum-based raw materials. Even more preferably, the engineered biopolymers are applicable in a pH range of 7.0 - 9.5, even more preferably in a range of pH 7.0 - 9.0.

Advantageously, the engineered biopolymers stabilise CaCOs, iron ions, as well as SO₄⁻, and PO₄⁻ salts. The Ca tolerance of the engineered biopolymers is very high, which means that no Ca complexes, or very low concentrations of Ca complexes, respectively, are formed either at a high alkalinity or at a high pH level. This means that the engineered biopolymers are available for a wide range of applications. The engineered biopolymers have a strong dispersing capacity, as well as very high hardness and iron stabilisation, even at high temperatures.

Surprisingly, this makes it possible to ensure even more efficient system performance. It has been found that the addition of engineered biopolymers prevents excessive biofilm formation even better. The biopolymers act as boosters, more precisely as nutrition boosters, to increase bacterial growth. The addition of bacteria and engineered biopolymers, which are based exclusively on non-petroleum-based raw materials, generates a synergistic effect which enables the removal of existing limescale deposits, corrosion deposits and other organic soiling, as well as the prevention of biofouling. Existing iron hydroxide sludge is dissolved and at the same time an absorption layer is formed, which prevents the reappearance of corrosion. The AOX levels of the waste water are also reduced. It is therefore a highly efficient prevention of heat blockers, while at the same time ensuring the provision of efficient cooling, which in turn enables an increase in efficiency and energy reduction of the entire system. Furthermore, using the biopolymers together with the bacteria largely eliminates the need to clean the entire system. This also eliminates the need to interrupt production of the system for cleaning.

Surprisingly, it was found that the combination of bacteria and engineered biopolymers achieves improved efficiency, while at the same time achieving a high and sustainable cleaning performance without the use of ter- / co-polymers, as well as the use of heavy metals and the avoidance of AMPA formation (aminomethylphosphonic acid = degradation product of phosphonates / glyphosate). On the contrary, the use of engineered biopolymers made exclusively from renewable raw materials is an environmentally friendly technology that is biodegradable and greatly reduces the phosphate content to below the detection limit.

The Langelier saturation index is formed by the following variables: TDS = total dissolved solids; sum of dissolved salts (mg/l); T = temperature (K); C = concentration of calcium carbonate (CaCO₃ ) (mg/l); A = alkalinity (measured as CaCOs mg/l); pH = pH level of the water.

The formula for calculating the LSI is: LSI = pH - pHₛ
Wherein the pHₛ is determined as follows: pHₛ = (9.3 + a + b) - (c + d)
Herein, a is determined by: a = (log(TDS ) - 1) / 10;
Herein, b is determined by: b = -13.12 * log (T) + 34.55;
Herein, c is determined by: c = log(C) -0.4;
Herein, d is determined by: d = log(A);

If the TDS level is not known, it can be calculated using the following table if the conductivity is available:

**Table 1: Conversion table between conductivity and TDS**

| Conductivity [S/cm] | TDS [mg/l] |
|---|---|
| 1 | 0,42 |
| 106 | 42,5 |
| 212 | 85 |
| 812 | 340 |
| 1008 | 425 |

The variables mentioned above all have an influence on the corrosion behaviour and the precipitation of water hardness.

According to a further embodiment of the presently claimed invention, the engineered biopolymers comprise carbohydrates, polysaccharides, starch, amylose, amylopectin, inulin, agar-agar and carboxymethylcellulose and no petroleum-based polymers.

This advantageously allows the sustainable binding of salts. By excluding petroleum-based polymers, aspects of sustainability and environmental compatibility are advantageously taken into account and further consumption of fossil resources is reduced.

A further aspect of the presently claimed invention includes the device for carrying out the process, whereby a biofilm sensor system is added to an existing open recooling plant, which can record measurements such as dosing of the bacteria, pH level, conductivity, scaling, non-invasive flow, corrosion and level measurement, biofilm growth etc. and display their changes. Preferably, the data can be monitored online via live tracking. The bacteria are added to the system in the form of spores. This is done evenly so that a constant concentration of bacteria is present and remains in the system.

Surprisingly, the consumption of inlet water and waste water in plants selected from the group consisting of open recooling plants and wet scrubbers could be reduced by the use of bacteria, whereby the bacteria ensure the system performance and thus also ensure a reduction in CO₂ emissions.

Therefore, in one aspect, the presently claimed invention relates to the use of bacteria to reduce the consumption of water in systems selected from the group consisting of open recooling plants and wet scrubbers.

Wet scrubbers are used for exhaust air or gas cleaning. The gas phase is brought into intensive mutual contact in the wet scrubber by a counterflow of finely dispersed water droplets or other scrubbing liquid and a counterflowing gas phase, so that the gas phase is cleaned (scrubbed) and one or more substances from the gas phase pass into the liquid phase or are adsorbed by it. Depending on the load, the contaminated liquid phase is treated differently for recirculation. Depending on its use, the liquid phase contains a nutrient content that favours the growth of bacteria.

In a preferred embodiment of the presently claimed invention, the water is feed water and/or waste water, particularly preferably the water is feed water and waste water.

In a preferred embodiment of the presently claimed invention, the use of the bacteria leads to a reduction in the consumption of water by an amount in the range of ≥ 20 to ≤ 70 % compared to the amount of water used in systems selected from the group consisting of open recooling plants and wet scrubbers in which at least one biocide is present.

In a preferred embodiment of the presently claimed invention, the use of the bacteria leads to a reduction in the consumption of waste water by an amount in the range of ≥ 50 to ≤ 92 %, preferably in the range of ≥ 50 to ≤ 80 %, compared to the amount of waste water discharged from plants selected from the group consisting of open recooling plants and wet scrubbers in which at least one biocide is present.

In a preferred embodiment of the presently claimed invention, the use of the bacteria leads to a reduction in the consumption of make-up water by an amount in the range of ≥ 10 to ≤ 50 % compared to the amount of make-up water added to systems selected from the group consisting of open recooling plants and wet scrubbers in which at least one biocide is present.

In a preferred embodiment of the presently claimed invention, the bacteria are used continuously as a continuous dosage or discontinuously as an intermittent dosage, such as once a week. The bacteria can also be used once, twice or three times a day or every other day. In a further preferred embodiment, the bacteria are used at intervals of ≥ 30 min to ≤ 100 h or 50 h, particularly preferably in the range from ≥ 45 min to ≤ 50 h or 30 h, most preferably in the range from ≥ 55 min to ≤ 25 h, even more preferably in the range from ≥ 60 min to ≤ 25 h. The most preferred embodiment is the continous dosing of bacteria to the system. Phrased differently, the bacteria are constantly added to the system, i.e. to the open recooling plant and/or wet scrubber.

In a preferred embodiment of the presently claimed invention, the bacteria are not genetically modified organisms, particularly preferably the bacteria are of natural origin and are classified as non-hazardous to water in accordance with the Ordinance on Installations for Handling Substances Hazardous to Water. The classification as not hazardous to water is based on the origin or composition of the bacteria used, so that a detrimental change in the quality of the water is not to be expected as a result of the bacteria used. The use of the bacteria according to the presently claimed invention enables the cooling water to be reused without further treatment, so that the cooling water does not necessarily have to be discharged into the municipal network or into a wastewater treatment plant as wastewater for which a charge is made, but can be used as extinguishing or irrigation water, for example.

In a further preferred embodiment of the presently claimed invention, the bacteria are bacteria of the genus Bacillus. More preferably, a mixture of different Baccilus species is used. Even more preferably, the mix comprises 3 anerobic and 2 aerobic Baccilus strains.

In a further preferred embodiment of the presently claimed invention, the bacteria are used in the form of spores. Particularly preferably, the bacteria are in the form of a composition comprising the bacteria and at least one prebiotic. The at least one prebiotic is a substance that specifically promotes the growth of the bacteria used to reduce water consumption. Preferably, the at least one prebiotic is selected from the group consisting of polysaccharides and sugar alcohols. Preferred polysaccharides are selected from the group consisting of indigestible fibres and dietary fibres, in particular insoluble dietary fibres, in particular cellulose, cellulose derivatives such as hydroxyethyl cellulose, carboxymethylcellulose (CMC) and microcrystalline cellulose (MCC), hemicelluloses, chitin, chitosan, lignin, xanthan gum, vegetable fibres, in particular cereal fibres, potato fibres, apple fibres, citrus fibres, bamboo fibres, extracted sugar beet fibres; oat fibres and soluble dietary fibres, in particular inulin, in particular native inulin, highly soluble inulin, granulated inulin, pectins, alginates, agar, carrageenan, gum arabic, guar gum, locust bean gum, xanthan gum, raffinose, xylose, polydextrose and lactulose, starches, in particular starches from wheat, potatoes, maize, rice, tapioca and oats, chemically, mechanically and/or enzymatically modified starches; and starch derivatives, e.g. dextrins or maltodextrins, in particular dextrins and maltodextrins from wheat, potatoes, maize, rice and oats, cyclodextrins, oligosaccharides, in particular oligofructose, gellan and glucose. Sugar alcohols are preferably selected from the group consisting of sorbitol, mannitol, isomalt, maltitol, lactitol, xylitol and erythritol.

The systems used according to the presently claimed invention, i.e. the open recooling plants and wet scrubbers, comprise cooling circuit water. Cooling circuit water is water that circulates in open recooling plants and wet scrubbers for the purpose of heat dissipation and is in contact with the atmosphere. The volume of the systems, i.e. the open recooling plants and wet scrubbers, is not limited. In a preferred embodiment, the systems have a volume in the range from ≥ 10 to ≤ 100,000 m³, particularly preferably a volume in the range from ≥ 20 to ≤ 50,000 m³.

In a further preferred embodiment of the presently claimed invention, the bacteria are used in the absence of a biocide, i.e. the bacteria are used once any biocide originally present in the system has been consumed. The absence of a biocide results in the residence time of the water in the system being extended. Accordingly, the bacteria themself do not produce any metabolic products that act or can act as biocides.

In a further preferred embodiment of the presently claimed invention, the biocide is an oxidising biocide or a non-oxidising biocide, particularly preferably an oxidising biocide. Preferably, the oxidising biocide is selected from the group consisting of one-component systems selected from the group consisting of ozone and ClO₂, H₂O₂ and NaOCl and two-component systems comprising nitrogen-containing compounds, preferably an inorganic ammonium salt, in combination with an oxidising agent, preferably a halogen source, more preferably a chlorine source; and two-component systems comprising organic biocides in combination with an oxidising agent, preferably a halogen source, more preferably a chlorine source. Preferably, the non-oxidising biocide is selected from the group consisting of quaternary ammonium compounds, benzyl-C₁₂₋₁₆ -alkyldimethyl chloride (ADBAC), polyhexamethylene biguanide (biguanide), 1,2-benzisothiazol-3(2H)-one (BIT), Bronopol (BNPD), bis(trichloromethyl)-sulfone, diiodomethyl-p-tolylsulfone, sulfone, bronopol/quaternary ammonium compounds, benzyl-C₁₂₋₁₆ -alkyldimethyl chloride (BNPD/ADBAC), bronopol/didecyldimethylammonium chloride (BNPD/DDAC), Bronopol/5-chloro-2-methyl-2H-isothiazol-3-one/2-methyl-2H-iso-thiazol-3-one (BNPD/Iso), NABAM/ sodium dimethyldithiocarbamate, sodium dimethyldithiocarbamate-N,N-dithiocarbamate (NABAM), sodium methyldithiocarbamate, sodium dimethyldithiocarbamate, 5-chloro-2-methyl-4-isothiazolin-3-one (CMIT), 2,2-dibromo-2-cyanoacetamide (DBNPA), DBNPA/Bronopol/Iso (DBNPA/BNPD/Iso), 4,5-dichloro-2-n-octyl-3-isothiazolin-3-one (DCOIT), didecyldimethylammonium chloride (DDAC), didecyldimethylammonium chloride, alkyldimethylbenzylammonium chloride (DDAC/ADBAC), dodecylguanidine monohydrochloride/ quaternary ammonium compounds, benzyl-C₁₂₋₁₆ -alkyldimethyl chloride (DGH/ ADBAC), dodecylguanidine monohydrochloride/ methylene dithiocyanate (DGH/MBT), glutaraldehyde (Glut), glutaraldehyde/quaternary ammonium compounds/benzyl cocoalkyldimethyl chloride (Glut/coco), glutaraldehyde/didecyldimethylammonium chloride (Glut/ DDAC), glutaraldehyde/5-chloro-2-methyl-2H-isothiazol-3-one/ 2-methyl-2H-isothiazol-3-one (Glut/lso), glutaraldehyde/methylene dithiocyanate (Glut/MBT), 5-chloro-2-methyl-2H-isothiazol-3-one/2-methyl-2H-isothiazol-3-one (Iso), methylene dithiocyanate (MBT), 2-methyl-4-isothiazolin-3-one (MIT), methaminoxirane (methaminoxirane), sodium bromide (NaBr), nitromethylidyntrimethanol, 2-n-octyl-3-isothiazolin-3-one (OIT), bis(trichloromethyl)sulfone/quaternary ammonium compounds, benzyl-C₁₂₋₁₆ -alkyldimethyl chloride (sulfone/ADBAC), symclosene, terbuthylazine, dazomet(thione), tetrakis(hydroxymethyl)phosphonium sulfate(2:1) (THPS) and p-[(diiodomethyl)sulfonyl]toluene(tolylsulfone), and mixtures thereof.

In a further preferred embodiment of the presently claimed invention, the bacteria are used once any biocide previously present in the system has been consumed, wherein the bacteria are used in the cooling circuit water in an amount sufficient for dominance formation, i.e. the bacteria are added in an amount that allows them to grow faster than the bacteria originally present in the system under the growth conditions given in the system, so that the bacteria originally present are displaced by a natural process, not by any metabolic products produced by the bacteria added according to the invention.

The use of bacteria according to the presently claimed invention has further advantages. The bacteria originally present colonise the surface of the system. This not only impairs the heat transfer, but also causes corrosion damage, known as biocorrosion or microbially induced corrosion (MIC). Corrosion inhibitors are therefore added to the cooling circuit water to form a protective top layer and thus provide corrosion protection for metallic materials, such as corrosion inhibitors selected from the group consisting of phosphates, e.g. zinc phosphates, zinc orthophosphates, calcium phosphate, dicalcium phosphate, barium phosphate, barium borophosphate, aluminium monophosphate, polyphosphate or strontium aluminium polyphosphate; silicates such as strontium phosphosilicates, zinc phosphosilicate, calcium phosphosilicates, barium phosphosilicates, calcium borosilicate or calcium metasilicate; borates such as zinc borate, barium metaborate, aluminium borate, potassium borate, calcium borate or magnesium borate; molybdates such as calcium molybdate or zinc molybdate; organic inhibitors such as organic metal complexes or polyaniline, oxides such as magnesium oxide or zinc oxide, as well as other corrosion inhibitors such as benzotriazole derivatives and thiadiazole derivatives, in particular such as N,N-dialkylaminomethylenebenzotriazole, 2,5-dimercapto-1,3,4-thiadiazole derivative, dimercaptobenzothiadiazole or dimercaptothiadiazole sodium.

The use of the bacteria according to the presently claimed invention has surprisingly shown that the bacteria used are not slime formers and only form a very thin biofilm, which prevents the formation of biocorrosion. This significantly reduces the consumption of additional resources, in particular the consumption of corrosion inhibitors, so that the use according to the presently claimed invention leads to further cost savings.

The bacteria originally present lead to biological contamination of the cooling circuit water, which in turn attacks the surfaces of the system and contaminates the entire system. This results in downtimes of the systems, which are uneconomical, and the maintenance costs of the systems are increased. Surprisingly, the use according to the presently claimed invention makes it possible to reduce downtimes for cleaning the systems, with cleaning even becoming completely superfluous in some cases. In this way, the economic efficiency of the operation of the systems is further increased. Therefore, in a preferred embodiment, the use according to the presently claimed invention comprises the use of the bacteria to simultaneously extend the service life of the materials used in the system.

Overall, the use of the bacteria according to the presently claimed invention leads to a significantly improved CO₂ balance in the operation of an open recooling plant or wet scrubber, which results from the addition of the large number of advantageous properties of the use according to the presently claimed invention, which were listed above. In particular, the CO₂ balance is improved by lower energy consumption for cleaning the wastewater volumes, more efficient cooling effect of the plant and avoidance of biodispersants (surfactants), synthetic biocides and corrosion inhibitors. Therefore, in a preferred embodiment, the use according to the presently claimed invention comprises the use of the bacteria for the simultaneous reduction of CO₂ emissions during the operation of plants selected from the group consisting of open recooling plants and wet scrubbers.

In a preferred embodiment of the presently claimed invention, the bacteria form a biofilm on the surface of the equipment which has a thickness in the range of ≥ 0.001 to ≤ 250 µm, particularly preferably in the range of ≥ 0.01 to ≤ 100 µm, more preferably < 32 µm, and most preferably in the range of ≥ 0.1 to ≤ 10 µm.

Advantageously, the bacteria used form a very thin biofilm that does not have any large water inclusions, so that efficient cooling is made possible, which in turn reduces the operating costs of the system. Therefore, in a preferred embodiment, the use according to the presently claimed invention comprises the use of the bacteria for simultaneously increasing the thermal conductivity in the operation of systems selected from the group consisting of open recooling plants and wet scrubbers, preferably for simultaneously increasing the thermal conductivity of heat exchangers and trickling systems.

The thickness of the biofilm is determined by using heat transfer measurements. This method utilizes specialized sensors that monitor changes in heat transfer efficiency which is impacted by the insulating properties of the biofilm. By placing these sensors in direct contact with the surface of the open recooling plant on which the biofilm develops, any changes in thermal resistance that are indicative of biofilm growth can be detected. The advantage of this technique lies in its non-invasive nature and the ability to provide real-time monitoring of the biofilm thickness which is essential for maintaining the efficiency and safety of the open recooling plant. For example, DE 102005038870 A1 describes a method to determine the thickness of the biofilm by heat transfer measurements in detail. The method has been further described in Biosensors 2022, 12(1), 18; "On-Line Monitoring of Biofilm Accumulation on Graphite-Polypropylene Electrode Material Using a Heat Transfer Sensor". The respective equipment for determining the thickness of the biofilm by using heat transfer measurements is commercially available from Lagotec under the name of "Deposens Compact".

In another embodiment, the presently claimed invention is directed to a process for reducing the consumption of water in systems selected from the group consisting of open recooling plants and wet scrubbers comprising at least the steps of
(A) adding bacteria to the circuit water of the system;
(B) discharging waste water from the system; and
(C) adding feed water to the system.

The preferred embodiments as described above also relate to the process or reducing the consumption of water in systems selected from the group consisting of open recooling plants and wet scrubbers.

### FIGURE DESCRIPTION

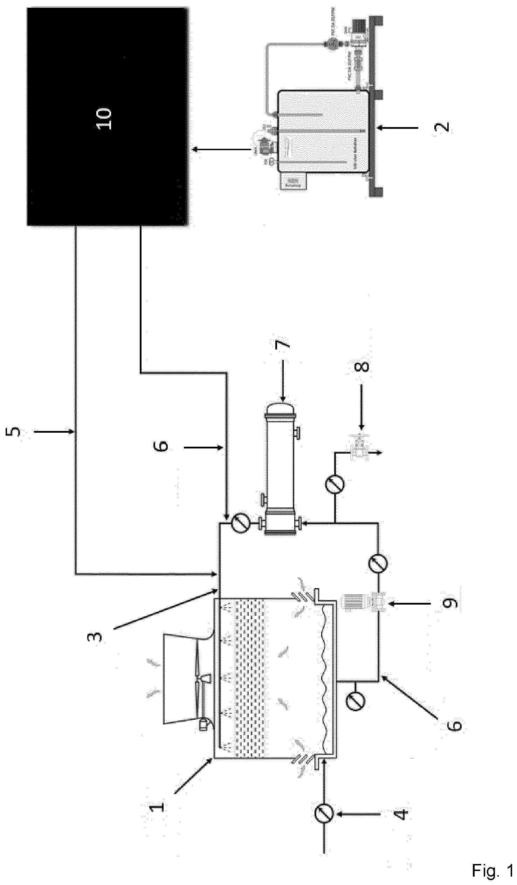

Figure 1 is a schematic representation of an open recooling plant (1) comprising a system for carrying out the process according to the presently claimed invention. The illustration includes dosing equipment (2) which, according to the control unit, feeds the required quantity of bacteria and preferably of engineered biopolymer to the cooling water through the return flow (3). This allows the evaporation water to achieve a Legionella and Pseudomonas content below the detection limit in accordance with legal regulations. As the water evaporates, dissolved and suspended solids concentrate, which increases the cooling water's potential for scaling/corrosion. The make-up water feed (4) is therefore provided to mix concentrated water with fresh water. The system further comprises a bypass/return pipe (5), a bypass/flow pipe (6), a heat exchanger (7), desalination valve (8), circulating pump (9) and process control unit (10). As open recooling plants are also highly efficient air scrubbers, they remove dust, particles and microbes from the air, whereby these enter the system with the fresh water. These are treated together with the water by means of the pump and the flow.

### EXAMPLES

The presently claimed invention is explained below with reference to six examples. The examples serve only to explain the invention and are in no way intended to limit the subject matter of the invention.

### Example 1:

The process according to the presently claimed invention is applied to a recooling plant with a system volume of 2,000 m³ cooling water. The process begins with the addition of bacteria in the form of spores, combined with an immediate stop to the addition of biocide, which was previously used to reduce the Legionella and Pseudomonas count.

The immediate result is that the gravel filters initially have a significantly increased backwash time, i.e. 1-2 times a day. Previously, the level was 1 time every 3-4 days. After just 2 months, a significant reduction can be observed. The gravel filters now only need to be flushed every 10-14 days.

After an initial phase of approx. 2 months, the legionella levels were constantly low, below the limit level of 100 CFU/100 ml. Furthermore, the thickening could be increased 4-fold (1,800 µS/cm), resulting in water savings of approx. 8,000m³/a. Scheduled cooling tower and system cleaning could be suspended. The measured levels are shown in Table 1:

| Time of measurement | Legionella in CFU/100ml | Pseudomonas in CFU/100ml | Limit level in CFU/100ml |
|---|---|---|---|
| 06 May | 870 | 920 | 100 |
| 06 June | 950 | 300 | 100 |
| 06 July | 70 | 85 | 100 |
| 06 August | 75 | 20 | 100 |
| 06 September | 65 | 15 | 100 |

### Example 2:

The process according to the presently claimed invention is applied to a recooling plant with a system volume of 100 m³ cooling water. The addition of bacteria in the form of spores and an immediate stop to the addition of biocide, which was previously used to reduce the Legionella and Pseudomonas count, began.

Here too, the legionella levels are at a low level after an initial phase. The entire system has significantly cleaner water and an improved energy balance is demonstrable. The further use of biocides could be completely avoided and the planned system cleaning could also be postponed thanks to the process according to the presently claimed invention. Previously, the system had to be cleaned every 3 months. This led to interruptions in production, as the heat exchanger no longer provided the required performance. With the help of the process according to the presently claimed invention, the entire system could be operated without cleaning and therefore without interrupting production.

### Example 3:

An open recooling plant with a system volume of 470 m³ was treated with an oxidising biocide. Due to the entry of the biocide and its ingredients (chlorides), the permissible level for chloride quickly rose to the maximum permissible level. This meant that desalination had to be activated earlier in order not to exceed the limit level. Operating the recooling plant in this way resulted in an annual wastewater volume of 219,000 m³ and an annual feed water volume of 400,000 m³. 18 tonnes of biocide were used per year. The thickness of the biofilm ranged from 550 to 3,000 µm.

Spores of bacteria of the genus Bacillus were added to the plant together with a probiotic. The addition of the biocide, which was previously used to suppress the growth of the bacteria, was stopped. As the chloride content in the water from that moment on was no longer increased by the biocide, a significantly higher thickening of the circulating water was achieved. Operating the recooling plant in this way resulted in an annual wastewater volume of 19,500 m³ and an annual feed water volume of 194,000 m³.

By using the bacteria , the increase in the permissible water parameters was significantly slowed down, so that the intervals for draining the cooling circuit water were increased. This resulted in a significant reduction in the volume of wastewater, namely a saving of around 200,000 m³, and also a significantly lower volume of make-up water. As the treatment of the make-up and waste water is associated with additional costs, the energy requirement was also significantly reduced. Likewise, 18 tonnes of biocide were saved per year. Furthermore, the thickness of the biofilm was determined, which was in the range of 0.1 to 130 µm.

### Example 4:

An open recooling plant with a system volume of 62 m³ was treated with an oxidising biocide. Due to the entry of the biocide and its ingredients (chlorides), the permissible level for chloride quickly rose to the maximum permissible level. This meant that desalination had to be activated earlier in order not to exceed the limit level. Operating the recooling plant in this way resulted in an annual wastewater volume of 27,000 m³ and an annual feed water volume of 46,000 m³. 1.2 tonnes of biocide were used per year. The thickness of the biofilm was in the range of 450 to 2,400 µm.

Spores of bacteria of the genus Bacillus were added to the plant together with a probiotic. The addition of the biocide, which was previously used to suppress the multiplication of the bacteria, was stopped. As the chloride content in the water was no longer increased by the biocide, a significantly higher thickening of the circulating water was achieved. Operating the recooling plant in this way resulted in an annual wastewater volume of 7,600 m³ and an annual feed water volume of 26,500 m³.

By using the bacteria, the increase in the permissible water parameters could be significantly slowed down, so that the intervals for draining the cooling circuit water were increased. This resulted in a significant reduction in the volume of waste water, namely a saving of approx. 19,400 m³ , and also a significantly lower volume of make-up water, namely a saving of approx. 19,500 m³. As the treatment of the make-up water and wastewater involves additional effort, the energy requirement was also significantly reduced. Likewise, 1.2 tonnes of biocide were saved per year. Furthermore, the thickness of the biofilm was determined, which was in the range of 0.1 to 32 µm.

### Example 5:

An open recooling plant with a system volume of 8,000 m³ was treated with an oxidising biocide. Due to the entry of the biocide and its ingredients (chlorides), the permissible level for chloride quickly rose to the maximum permissible level. This meant that desalination had to be activated earlier in order not to exceed the limit level. Operating the recooling plant in this way resulted in an annual wastewater volume of 404,000 m³ and an annual feed water volume of 1,250,000 m³. Every year, 21 tonnes of biocide were used. The thickness of the biofilm ranged from 500 to 1,800 µm.

Spores of bacteria of the genus Bacillus were added to the plant together with a probiotic. The addition of the biocide, which was previously used to suppress the multiplication of the bacteria, was stopped. As the chloride content in the water from that moment on was no longer increased by the biocide, a significantly higher thickening of the circulating water was achieved. Operating the recooling plant in this way resulted in an annual wastewater volume of 215,000 m³ and an annual feed water volume of 1,060,000 m³.

By using the bacteria, the increase in the permissible water parameters could be significantly slowed down, so that the intervals for draining the cooling circuit water were increased. This resulted in a significant reduction in the volume of waste water, namely a saving of approx. 189,000 m³, and also a significantly lower volume of make-up water, namely a saving of approx. 190,000 m³. As the treatment of the make-up and waste water involves additional effort, the energy requirement was also significantly reduced. Likewise, 1.2 tonnes of biocide were saved per year. Furthermore, the thickness of the biofilm was determined, which was in the range of 0.1 to 10 µm.

### Example 6:

The process according to the presently claimed invention is applied to a recooling plant with a system volume of 120 m³ cooling water. The addition of bacteria in the form of spores began, combined with an immediate stop to the addition of biocide, which previously was used to reduce the Legionella and Pseudomonas count.

Here, too, the legionella levels can be stabilised at a very low level <50 CFU/100 ml after an initial phase. The entire system has significantly cleaner water and an improved energy balance is demonstrable. The further use of biocides could be completely avoided, whereby the adsorbable organic halogen compound levels (AOX levels) in the wastewater were significantly reduced after a short time by the process according to the presently claimed invention. The previously required activated carbon filter could be completely eliminated by the treatment according to the presently claimed invention. In addition, the existing corrosion problems can also be significantly improved within 2 months. With the help of the process according to the presently claimed invention, the wastewater could be transferred to a new use (as extinguishing or surface irrigation water) in agreement with the responsible authority, whereby the previous wastewater costs could be significantly reduced.

## Claims

1. Process for treating cooling water in open recooling plants, wherein a legionella level of <100 CFU/100ml, measured according to DIN EN ISO 11731:2019-03, is achieved, **characterised in that** bacteria are added to the cooling water, wherein no biocides are added to the cooling water, and wherein the bacteria form a biofilm on the surface of the open recooling plant, which has a thickness in the range of 0.001 - 250 µm.

2. The process according to claim 1, wherein a Pseudomonas level in the cooling water of open recooling plants of <100 CFU/100ml, measured according to DIN EN ISO 16266, is achieved.

3. The process according to any one of the preceding claims, wherein the biofilm has a thickness in the range of 0.01 - 100 µm, preferably in the range of 0.1 - 10 µm.

4. The process according to any one of the preceding claims, wherein the bacteria are not genetically mutated organisms, in particular the bacteria are classified as not hazardous to water.

5. The process according to any one of the preceding claims, wherein the bacteria are Gram-positive bacteria which grow only under aerobic conditions.

6. The process according to any one of the preceding claims, wherein the bacteria are maintained at a temperature in the range of 10-55°C, preferably in the range of 15-45°C.

7. The process according to any one of the preceding claims, wherein the bacteria have a pH level in the range of 4.5 - 10.0, preferably in the range of 5.5 - 9.3, even more preferably in the range of 5.5 - 9.0.

8. The process according to any one of the preceding claims, wherein the bacteria require an electrical conductivity of the cooling water is 3000 - 10 µS / cm, preferably it is in the range of 2500 - 20 µS / cm, even more preferably in the range of 1500 - 100 µS / cm, determined according to ISO 7888:1985.

9. The process according to any one of the preceding claims, wherein engineered biopolymers are added in addition to the bacteria, in particular the biopolymers are applicable in a Langelier saturation index of 0.5 - 3.0.

10. The process according to any one of the preceding claims, wherein the engineered biopolymers comprise carbohydrates, polysaccharides, starch, amylose, amylopectin, inulin, agar-agar and carboxymethylcellulose and do not comprise petroleum-based polymers.

11. The process according to any one of the preceding claims, wherein the open recooling plant is disinfected prior to the addition of cooling water.

12. Use of bacteria to reduce the consumption of water in systems selected from the group consisting of open recooling plants and wet scrubbers.

13. A process for reducing the consumption of water in systems selected from the group consisting of open recooling plants and wet scrubbers comprising at least the steps of
(A) adding bacteria to the circuit water of the system;
(B) discharging waste water from the system; and
(C) adding feed water to the system.

14. The use or process according to claim 12 or 13, wherein the consumption of water is reduced by an amount in the range of ≥ 20 to ≤ 70 % compared to the amount of water used in plants selected from the group consisting of open recooling plants and wet scrubbers in which at least one biocide is present, preferably wherein the bacteria are Gram-positive bacteria.

15. The use or process according to any one of claims 12 to 14, wherein the water is feed water and/or waste water, preferably the water is feed water and waste water, more preferably wherein the use of the bacteria or the process is in the absence of a biocide and comprises simultaneously preventing the formation of biocorrosion.
